(19) Europäisches Patentamt
European Patent Office
Office européen des brevets

(11) Veröffentlichungsnummer: **0 178 555**
**A2**

(12) **EUROPÄISCHE PATENTANMELDUNG**

(21) Anmeldenummer: 85112580.7

(22) Anmeldetag: 04.10.85

(51) Int. Cl.[4]: **C 09 D 11/02**
B 41 M 5/035, D 06 P 5/00

(30) Priorität: 18.10.84 DE 3438100

(43) Veröffentlichungstag der Anmeldung: 23.04.86 Patentblatt 86/17

(84) Benannte Vertragsstaaten: CH DE FR GB IT LI

(71) Anmelder: HOECHST AKTIENGESELLSCHAFT
Postfach 80 03 20
D-6230 Frankfurt am Main 80(DE)

(72) Erfinder: Ong, Sienling, Dr.
Jahnstrasse 38
D-6238 Hofheim am Taunus(DE)

(54) **Gebrauchsfertige flüssige Verdickerpräparationen auf wässriger Basis für Umdruckverfahren.**

(57) Aus einem hydrophilen Polyacrylat erzeugte synthetische Verdickerpräparationen müssen vor ihrer Verwendung zur Herstellung von Dispersionsfarben für den Thermoumdruck mit einem hydrophoben, thermoplastischen Kunstharz auf Basis von Polyvinylacetat vermischt werden. Dieser Mischvorgang zweier Produkte mit gegensätzlichen Eigenschaften ist schwer zu beherrschen und führt deshalb oft zu Reklamationen. Erfindungsgemäß wurde nun gefunden, daß sich diese Schwierigkeiten beheben lassen und man für den gleichen Verwendungszweck einen einfach zu handhabenden, lagerstabilen Verdicker erhält, wenn anstelle mit dem hydrophilen Polyacrylat die thermoplastische Kunstharzkomponente der Mischung mit einem hydrophoben Acrylsäureester/Methacrylsäure-Copolymerisat präpariert ist.

# Gebrauchsfertige flüssige Verdickerpräparationen auf wäßriger Basis für Umdruckverfahren

Die vorliegende Erfindung betrifft lagerbeständige flüssige sowie wasserhaltige Verdickerpräparationen für wäßrige Druckfarben zum Aufbringen von heiß sublimierbaren Dispersionsfarbstoffen auf Thermotransferdruckpapier im Tiefdruck auf Papierdruckmaschinen oder im Gravurdruck auf Textildruckmaschinen; wäßrige Drucktinten für den Einsatz im Tiefdruck oder wäßrige Druckpasten für den Einsatz im Gravurdruck, die neben den Farbstoffen solche Verdickerpräparationen enthalten; ein Verfahren zur Herstellung von Thermotransferdruckpapieren im Tiefdruck oder im Gravurdruck unter Verwendung derartiger wäßriger Druckfarben; sowie die auf diesem Wege erhaltenen Thermotransferdruckpapiere. Unter Verwendung der erfindungsgemäßen Verdickerpräparationen erzeugte Thermotransferdruckpapiere sind für den Einsatz bei Thermoumdruckverfahren vorgesehen, mit welchem sich auf dem Farbträger vorgedruckte Muster, insbesondere bunte Farbmuster, durch Schmelzen oder Sublimieren der Farbstoffe auf sich mit diesem in Kontakt befindliche Substrate aus hydrophoben synthetischen Fasermaterialien übertragen und dort fixieren lassen.

Es ist bekannt, daß sich Transferdruckpapiere für den Thermoumdruck von heiß sublimierbaren Farbstoffen sowohl im Tiefdruck auf Papierdruckmaschinen als auch im Gravurdruck auf Textildruckmaschinen herstellen lassen. Gemäß dem Tiefdruckverfahren wird für diese Aufgabe üblicherweise mit leicht flüchtigen, hydrophoben Lösemitteln gearbeitet, um das Quellen des zu bedruckenden Papiers während des Druckvorgangs zu vermeiden. Durch eine Quellung des bedruckten Substrats wird nämlich die Rapportgenauigkeit der auf dem Transferpapier vorgedruckten Dessins sehr nachteilig beeinflußt. Von technischer Seite her gesehen

besteht indessen keine Veranlassung, auf Papier-Tiefdruckmaschinen mit wäßrigen Drucktinten vorzugehen. Kalkulatorische und ökologische Überlegungen lassen allerdings beim Einsatz von wäßrigen Drucktinten wesentliche Vorteile erkennen, weil damit das Explosions- und Brandrisiko in den Druckereibetrieben erheblich vermindert wird und sich somit auch die dafür bereitzustellenden Versicherungsprämien entsprechend reduzieren. Trotzdem verwenden sämtliche Methoden zum Bedrucken von Papier im Tiefdruck noch immer leichtflüchtige lipophile Lösemittel, zumal bislang alle Versuche gescheitert sind, diese leichtflüchtigen lipopilen Lösemittel durch weniger gefährlicher Stoffe zu ersetzen.

Dennoch sind Bestrebungen mit dem Ziel, die leichtflüchtigen lipophilen gegen andere Lösemittel auszutauschen, aus der Patentliteratur bekannt geworden. So beschreibt beispielsweise die DE-OS 31 79 711 ein derartiges Verfahren zur Herstellung von Drucken auf Transferpapier im Tiefdruck unter Verwendung von wäßrigen, sublimierbare Farbstoffe aufweisenden Druckfarben, die als Verdickung Mischungen aus leichtflüchtigen hydrophilen und schwerflüchtigen hydrophoben Lösemitteln enthalten, wobei die letztgenannten den Hauptanteil der Kombination ausmachen. Die dort erwähnte Technik setzt also die Vermischung zweier Produkte mit gegensätzlichen Eigenschaften voraus. Sie ist sehr arbeitsintensiv, vor allem jedoch umständlich in ihrer Handhabung und deswegen schwer zu beherrschen. Aus diesem Anlaß bietet sich in dem vorliegenden Fall auch keine Möglichkeit an, daraufhin ausgerichtete Rationalisierungsmaßnahmen ins Auge zu fassen. Ferner ist dieses bekannte Verfahren ausschließlich für das Bedrucken von Papierbahnen im Tiefdruck zu verwenden; für Drucke auf Papier mittels Textildruckmaschinen ist es hingegen unbrauchbar. Nun weiß aber jeder Fachmann, daß Transferdruckpapiere musterbedingt sowohl auf Papier- als auch

auf Textildruckmaschinen hergestellt werden. Eine Verdickerpräparation, die gleichermaßen für beide Drucksysteme geeignet wäre, würde also die Disposition erleichtern und die Lagerhaltung entlasten. Solche Verdickerpräparationen, die für beide Systeme in Betracht gezogen werden können, gibt es freilich bisher nicht, weil das Arbeitsprinzip von Papier-Tiefdruckmaschinen für den Einsatz von Drucktinten mit leichtflüchtigen Lösemitteln konzipiert ist und dasjenige von Textil-Gravurdruckmaschinen auf der Anwendung von wäßrigen Druckpasten basiert.

Die für die vorliegende Erfindung zu lösende Aufgabe bestand somit darin, die eingangs geschilderten Schwierigkeiten im Zusammenhang mit für den Thermoumdruck geeigneten Farbstoffzubereitungen auszuräumen und diesbezüglich angepaßte, gebrauchsfertige Verdickerpräparationen zu entwickeln, welche man zum Bedrucken von für den genannten Zweck als Farbträger dienenden Papierbahnen in gleicher Weise nach den beiden herkömmlichen Druckverfahren, d.h. sowohl im Tiefdruck als auch im Gravurdruck, verwenden kann.

Es wurde nunmehr gefunden, daß sich diese geforderten Eigenschaften entsprechend der in Rede stehenden Erfindung durch Verdickerpräparationen realisieren lassen, in denen als Mischungskomponenten

(a) ein wasserunlösliches Copolymerisat aus Vinylacetat und einer ungesättigten niedermolekularen Carbonsäure,
(b) ein wasserunlösliches Copolymerisat von vernetzter Struktur aus einem Acrylsäureester, einer ungesättigten niedermolekularen Carbonsäure und einem dafür geeigneten Vernetzer,
(c) ein hydrophiles Lösemittel der allgemeinen Formel

$$R - O(CH_2-\underset{\displaystyle R'}{\underset{|}{C}}H-O)_nH$$

in welcher R = Wasserstoff oder eine Alkylgruppe mit 1 bis 4 Kohlenstoffatomen,
R' = Wasserstoff oder Methyl, und
n = Null oder eine Zahl von 1 bis 30, vorzugsweise 1 bis 20 bedeuten,

(d) Wasser, und
(e) Ammoniak

vorliegen.

Im Einklang mit den jeweils gleichlautend kodifizierten Komponenten sind die erfindungsgemäßen Verdickerpräparationen gekennzeichnet durch einen Gehalt an

(a) einem Bindemittel auf Kunstharzbasis aus einem wasserunlöslichen, carboxylgruppenhaltigen Polyvinylacetat,
(b) einem Ausrüstungsmaterial aus einem wasserunlöslichen vernetzten, carboxylgruppenhaltigen Polyacrylsäureester, der durch Mischpolymerisation der Monomeren in wäßrigem Medium in Gegenwart anionischer Emulgatoren synthetisiert wird, und
(c) einem wasserlöslichen, hydroxylgruppenhaltigen Lösungsmittel der angegebenen molekularen Struktur,

wobei den Komponenten a) und b) im wesentlichen das Zuwegebringen der Verdickerfunktion zufällt. Dieses Gemisch aus den Komponenten a), b) und c) ist erfindungsgemäß mittels Wasser (d) und Ammoniak (e) als Flüssigkonzentrat aufbereitet und kann noch weitere Hilfsmittel wie oberflächenaktive Substanzen, beispielsweise nichtionische Emulgatoren, wasserlösliche Entschäumer und Natriumsulfit enthalten. Es stellt als solches eine gebrauchsfertige, gegebenenfalls standardisierte Verdickerpräparation dar, welche sich durch gute Lagerstabilität auszeichnet. Die zur Herstellung der farbigen Drucktinten oder Druckpasten erforderlichen Verdickerpräparationsmengen können dann nach entsprechender Verdünnung leicht den Viskositätsanforderungen der in Frage kommenden Druckmaschine angepaßt werden.

Gegenüber den üblichen Gravurdruckmaschinen im Textildruck benötigen schnellaufende Papier-Tiefdruckmaschinen beispielsweise Drucktinten mit einer geringeren Viskosität und einer höheren Filmelastizität der gebildeten Druckfilme. Eine höhere Elastizität und eine gute Papieraffinität müssen diese Drucktinten deshalb besitzen, damit die Näpfchen der Tiefdruckraster sich während des Druckvorgangs vollständig entleeren und keine "missing dots" bilden. "Missing dots" führen zu unegalen Drucken und sollten daher tunlichst vermieden werden. Mit Drucktinten auf Basis von hydrophoben Lösungsmitteln ist die Verhinderung der "Missing dots"-Bildung verhältnismäßig einfach; nichtsdestoweniger hat es aber bisher keine Methode gegeben, mit deren Hilfe sich der gleiche Effekt bei Anwendung von Drucktinten auf wäßriger Basis erzielen ließ.

Mit den aus den erfindungsgemäßen Verdickerpräparationen hergestellten wäßrigen Drucktinten können überraschenderweise einwandfreie, egale Drucke auf Transferdruckpapieren nach dem Tiefdruckverfahren erzeugt werden.

Besonders vorteilhaft ist es darüber hinaus, daß man unter Einsatz der erfindungsgemäßen Verdickerpräparationen auch Druckpasten für die Textil-Gravurdruckmaschinen ansetzen kann. Hierdurch wird eine kleinere Lagerhaltung an dem dafür notwendigen Verdickungsmittel ermöglicht, was immerhin eine Ersparnis an den Materialkosten bedeutet.

Als weiterer Gewinn bei Anwendung der erfindungsgemäßen Verdickerpräparationen ist deren anpassungsfähige Beschaffenheit von leicht flüssig bis pastös hervorzuheben, so daß sie aufgrund dieser Eigenschaft keiner Rationalisierungsmaßnahme im Wege stehen.

Durch Beimischung von lösungsmittelhaltigem, wäßrigen Ammoniak kann die Beschaffenheit der Verdickerkonzentrate

so gesteuert werden, daß sie wahlweise in flüssigem oder pastösem Zustand vorliegen. Beide Formen sind gleich stabil und bleiben auch nach monatelanger Lagerung homogen.

Bezogen auf 1000 g der fertigen Druckfarbe enthalten die erfindungsgemäßen Verdickerpräparationen zweckmäßig folgende Mengen an den jeweiligen Mischungskomponenten:

(a) 75 bis 400 g, vorzugsweise zwischen 100 und 250 g;
(b) 20 bis 400 g, vorzugsweise zwischen 50 und 300 g (als 20-40%ige wäßrige Emulsion);
(c) 30 bis 200 g, vorzugsweise zwischen 50 und 140 g (gegebenenfalls als Gemisch);
(d) 30 bis 400 g, vorzugsweise zwischen 50 und 300 g; und
(e) 10 bis 30 % der Gewichtsmenge von Komponente a) (als 25%ige wäßrige Lösung).

Als Bindemittel (a) sind für die beanspruchten Präparationen die aus der DE-PS 803 956 und der GB-PS 733 507 bekannten Copolymerisate aus Vinylacetat und ungesättigten, niedermolekularen aliphatischen Carbonsäuren wie Acrylsäure, Methacrylsäure oder insbesondere Crotonsäure geeignet.

Als Ausrüstungsmaterial (b) kommen erfindungsgemäß wäßrige Emulsionen von wasserunlöslichen Copolymeren mit vernetzter Struktur aus Acrylsäureestern niederer aliphatischer Alkohole, wie Acrylsäure-methylester, -ethylester, -propylester oder -butylester, und ungesättigten, niedermolekularen aliphatischen Carbonsäuren, wie Acrylsäure, Methacrylsäure oder Maleinsäure, in Betracht, die in Gegenwart von anionischen Emulgatoren erhalten werden können. In dieser Hinsicht sei insbesondere auf Beispiel 6 der FR-PS 1 280 792 verwiesen, wo ein Mischpolymerisat aus Acrylsäure-ethylester und Methacrylsäure sowie als Vernetzer Glyoxal-tetra-allylacetal (Tetra-allyloxy-ethan) beschrieben ist.

Auch Copolymere gemäß Beispiel II der GB-PS 958 303, welche aus Acrylsäure, Acrylsäure-methylester und Vinylacrylat (Vernetzer) gebildet werden, sind erfindungsgemäß als Ausrüstungsmaterial (b) brauchbar, sofern die Methylestergruppen in solchen Polymerisationsprodukten nicht verseift sind, wie dies in zweiter Arbeitsstufe des genannten Beispiels geschieht, und wenn als Emulgatur einer vom anionischen Typ verwendet wird.

Ferner lassen sich nach der vorliegenden Erfindung auch wäßrige Emulsionen von Copolymerisaten gemäß Beispiel 2 der GB-PS 870 994 aus Acrylsäure-ethylester, Methacrylsäure und Diallylmaleat (Vernetzer) als Ausrüstungsmaterial (b) einsetzen, solange ihre Estergruppen noch intakt sind.

Bei den für die Bereitung der wäßrigen Emulsion aus den vorhergenannten besonderen Varianten bezüglich der Zusammensetzung von Komponente b) benutzten anionischen Emulgatoren handelt es sich beispielsweise um Ammoniumlaurylsulfat oder Natrium-ß-hydroxyoctadecansulfonat.

Der chemische Aufbau der für die erfindungsgemäßen Verdickerpräparationen vorgesehenen Lösemittelkomponente c) erlaubt es, eine Auswahl zwischen aliphatischen Alkoholen, Diolen und Glykolethern zu treffen. In der Praxis ist es allerdings zweckmäßig, wenn man davon nur solche Lösemittel in Betracht zieht, die sich durch geringen Dampfdruck und hohen Siedepunkt auszeichnen. Beim Einsatz von Tiefdruckmaschinen mit ungenügender Trocknungskapazität ist dagegen die Verwendung von leichtflüchtigen Alkoholen wie Methanol, Ethanol oder Propanol angebracht. Um in diesen Fällen die Menge von derartig leichtflüchtigen Alkoholen zu minimieren, werden dieselben bevorzugt in Mischung mit schwerflüchtigeren Lösemitteln verwendet. Auch Mischungen von Lösemitteln vom genannten Typ mit Wasser haben sich für diesen Zweck bewährt.

Ferner muß der Lösungsmittelanteil in der fertigen Verdickerpräparation mindestens 30 Vol.-% der darin insgesamt verwendeten Flüssigkeitsmenge betragen. Für die Praxis ist es angebracht, die Auswahl der benötigten Lösungsmittelkomponente c) so abzustimmen, daß sie durch einen Schmelzpunkt bei etwa 0°C, einen niederen Dampfdruck und einen hohen Siedepunkt über 100°C charakterisiert ist.

Die auf dieser Grundlage hergestellten Drucktinten oder Druckpasten enthalten somit kaum oder gar kein flüchtiges, brennbares Lösungsmittel. Es sind also die bei üblichen Typen von Tiefdrucktinten auf Lösemittelbasis erforderlichen Sicherheitsvorkehrungen entbehrlich. Überraschenderweise wurden jedoch mit den erfindungsgemäßen Verdickerpräparationen und den daraus hergestellten wäßrigen Drucktinten im Tiefdruck Transferdruckpapiere und damit beim Thermoumdruck Textildrucke erzielt, die den mit Lösungsmittelfarben im Tiefdruck erreichten färberischen Qualitäten gleichwertig sind. Im Gegensatz zur Anwendung der bekannten wäßrigen Druckfarben im Tiefdruck werden beim Einsatz der erfindungsgemäßen Drucktinten die Näpfchen der Tiefdruckraster vollständig entleert, d.h. es entstehen keine "missing dots", was zu einem egalen Druckbild führt.

Besonders vorteilhaft ist es, daß mit den erfindungsgemäßen Verdickerpräpartionen hergestellte Drucktinten auf beliebiges Papier gedruckt werden können, d.h. daß hierfür kein speziell vorbehandeltes Papier erforderlich ist.

Gegenstand der Erfindung sind somit ebenfalls die unter Einbeziehung der beanspruchten Verdickerpräparationen erzeugten wäßrigen Drucktinten bzw. Druckpasten, welche die transferrierbaren Farbstoffe aufweisen. Bei dieser Gelegenheit sei hervorgehoben, daß diese Dispersionsfarbstoffe in ihrer handelsüblichen Form eingesetzt werden können,

also in dieser Hinsicht keine speziellen Farbstoffpräparationen erforderlich sind.

Das Verdrucken der mit den erfindungsgemäßen Verdickerpräparationen erzeugten wäßrigen Druckfarben erfolgt im Naß-in-Trocken-Auftrag, d.h. nach dem Druck jeder Farbe hat eine Zwischentrocknung zu erfolgen.

Die vorliegende Erfindung betrifft deshalb auch ein Verfahren zur Herstellung von Thermotransferdruckpapieren durch Bedrucken von Papierbahnen mit wäßrigen, heiß sublimierbare Dispersionsfarbstoffe enthaltenden Drucktinten im Tiefdruck auf Papierdruckmaschinen oder Druckpasten im Gravurdruck auf Textildruckmaschinen, das dadurch gekennzeichnet ist, daß die Druckfarben eine erfindungsgemäße Verdickerpräparation enthalten und nach dem Druck jeder Farbe eine Zwischentrocknung erfolgt. Auf diese Weise werden scharf stehende Druckmuster erhalten, die solchen mit den üblichen Tiefdruckfarben auf Lösemittelbasis erzeugten Dessins in nichts nachstehen. Das erfindungsgemäße Verfahren kann auch nach dem Trichromie-Prinzip durchgeführt werden. Da die Druckfarben nur minimale Mengen an brennbaren Lösemitteln enthalten, ist deren Konzentration in der Abluft so gering, daß keinerlei besondere Vorkehrungen hinsichtlich der Entflammbarkeit oder Explosionsgefährdung getroffen werden müssen.

Die so erhältlichen Transferdruckpapiere zeichnen sich durch ein scharfes und egales Druckbild bei einwandfreiem Rapport aus. Auch ohne zusätzliche Beschichtung sind die Papiere einwandfrei lagerstabil und führen beim Thermoumdruck zu hervorragenden Textildrucken.

Gegenstand der Erfindung sind schließlich auch Thermotransferdruckpapiere, die im Tiefdruck auf Papierdruckmaschinen mit einer Drucktinte oder im Gravurdruck auf Textildruckmaschinen mit einer Druckpaste bedruckt wurden, welche neben den heiß sublimierbaren Dispersionsfarbstoffen eine Verdickerpräparation gemäß vorliegender Erfindung enthielten.

Der Thermotransferdruck ist allgemein bekannt und beispielsweise in den FR-PSS 1 223 330, 1 334 829 und 1 585 119 eingehend beschrieben. Hierbei werden die bedruckten Transferdruckpapiere in engen Kontakt mit dem zu bedruckenden Textilmaterial gebracht, worauf unter Wärme- und gegebenenfalls Druck- oder Vakuumeinwirkung der Farbstoff von dem Träger auf das Substrat transferiert und dort fixiert wird.

In den folgenden Beispielen beziehen sich Prozentangaben auf das Gewicht, sofern nichts anderes angegeben ist.

Beispiel 1

Herstellung der flüssigen Verdickerpräparation:

Als Bindemittel auf Kunstharz-Basis wird eine 50%ige Lösung eines wasserunlöslichen Copolymerisats aus Vinylacetat und Crotonsäure eingesetzt, die man durch Lösen von

| | |
|---|---|
| 500 g | des obigen Copolymerisats in |
| 240 g | Ethylenglykol-monoethylether, |
| 203 g | Wasser, |
| 50 g | einer 25%igen, wäßrigen Ammoniaklösung und |
| 7 g | kristallinem Natriumsulfit |

unter Rühren zubereitet. Diese Lösung zeigt eine Viskosität von 1,5 bis 3,5 Pas.

Durch Vermischen der in vorhergehender Weise angesetzten Bindemittellösung unter Rühren mit einem synthetischen Verdickungsmittel aus

| | |
|---|---|
| 200 g | einer 30%igen, wäßrigen Emulsion eines vernetzten Copolymerisats, das man durch Emulsionspolymerisation aus Acrylsäure-ethylester und Methacrylsäure sowie Glyoxal-tetra-allylacetal (als Vernetzer) in Gegenwart eines anionischen Emulgators gemäß der FR-PS 1 280 792 erzeugt, |

wird sodann eine gebrauchsfertige, flüssige Verdickerpräparation erhalten. Bei dem zuletzt erwähnten Mischvorgang ist eine weitere Emulgatorzugabe überflüssig, weil die Emulsion des Verdicker-Copolymerisats bereits von sich aus Emulgator in ausreichender Menge aufweist.

Mit 70 bis 90 g dieser konzentrierten, wasserhaltigen Verdickerpräparation werden 20 bis 200 g Dispersionsfarbstoff innig vermischt und durch Auffüllen von Wasser und etwas wäßrigem Ammoniak (25%ig) auf 1000 g Gesamtgewicht zu einer Drucktinte mit einem pH-Wert von etwa 8 verdünnt.

Diese Drucktinte ist zum Bedrucken von Papierbahnen auf Papier-Tiefdruckmaschinen geeignet, die für den Einsatz beim Thermoumdruck vorgesehen sind.

Beispiel 2

Durch einen weiteren Zusatz von 3 bis 10 g, vorzugsweise von 4 bis 10 g der in Beispiel 1 genannten, wäßrigen Emulsion des Verdicker-Copolymerisats sowie pH-Wert-Nachstellung auf ca. 8 mittels Ammoniak (25%ig) werden aus den dortigen Drucktinten für das Tiefdruckverfahren hier auf die davon abweichende Applikationstechnik hin im Viskositätsverhalten angepaßte Druckpasten für das Bedrucken von Papier auf Textil-Gravurdruckmaschinen hergestellt.

Beispiel 3

Trichromie-Papierdruck:

Auf einer Tiefdruckmaschine (System CERUTTI-ROTOPRESS) wird eine Papierbahn nacheinander mit den folgenden, nach Beispiel 1 erhaltenen Drucktinten bedruckt:

| Farbe | Farbstoff nach Beispiel ... der EP-PS 28 342 | g |
|---|---|---|
| Gelb | 19 | 80 |
| Rot | 3 | 200 |
| Blau | 14 | 200 |
| Schwarz | * | 400 |

* Mischung aus etwa 80 % Blau, 13 % Gelb und 7 % Rot, } wie vorstehend angegeben

Nach dem Druck jeder Farbe wird das bedruckte Papier in der Mansarde zwischengetrocknet.

Das so hergestellte Transferdruckpapier fleckt auch bei längerem Lagern nicht ab und ergibt als Farbträger im Thermoumdruck hervorragende bunte Drucke auf Polyesterfaser-Textilmaterialien.

Patentansprüche:

1. Lagerbeständige flüssige sowie wasserhaltige Verdickerpräparationen für wäßrige Druckfarben zum Aufbringen von heiß sublimierbaren Dispersionsfarbstoffen auf Thermotransferdruckpapier im Tiefdruck auf Papierdruckmaschinen oder im Gravurdruck auf Textildruckmaschinen, dadurch gekennzeichnet, daß als Mischungskomponenten
   (a) ein wasserunlösliches Copolymerisat aus Vinylacetat und einer ungesättigten niedermolekularen Carbonsäure,
   (b) ein wasserunlösliches Copolymerisat von vernetzter Struktur aus einem Acrylsäureester, einer ungesättigten niedermolekularen Carbonsäure und einem dafür geeigneten Vernetzer,
   (c) ein hydrophiles Lösemittel der allgemeinen Formel

$$R - O(CH_2-\underset{\displaystyle R'}{\underset{|}{CH}}-O)_nH$$

   in welcher R = Wasserstoff oder eine Alkylgruppe mit 1 bis 4 Kohlenstoffatomen,
   R' = Wasserstoff oder Methyl, und
   n = Null oder eine Zahl von 1 bis 30 bedeuten,
   (d) Wasser, und
   (e) Ammoniak
   vorliegen.

2. Verdickerpräparationen nach Anspruch 1, dadurch gekennzeichnet, daß das am Komponentengemisch beteiligte Copolymerisat a) ein polymeres Umsetzungsprodukt aus den Monomerenbestandteilen Vinylacetat und Crotonsäure darstellt.

3. Verdickerpräparationen nach den Ansprüchen 1 oder 2, dadurch gekennzeichnet, daß das am Komponentengemisch

beteiligte Copolymerisat b) ein polymeres Umsetzungsprodukt aus den Monomerenbestandteilen Acrylsäureethylester und Methacrylsäure samt herbeigeführter Vernetzung darstellt.

4. Verdickerpräparationen nach Anspruch 3, dadurch gekennzeichnet, daß das Copolymerisat b) durch Polymerisation in wäßrigem Medium erhalten worden ist und im Konzentrat des Komponentengemisches als stabile Emulsion vorliegt.

5. Verdickerpräparationen nach einem oder mehreren der Ansprüche 1 bis 4, gekennzeichnet durch einen Gehalt, bezogen auf 1000 g der fertigen Druckfarbe, an den folgenden Mengen der Mischungskomponenten:
(a) 75 bis 400 g, vorzugsweise zwischen 100 und 250 g;
(b) 20 bis 400 g, vorzugsweise zwischen 50 und 300 g (als 20-40%ige, wäßrige Emulsion);
(c) 30 bis 200 g, vorzugsweise zwischen 50 und 140 g (gegebenenfalls als Gemisch);
(d) 30 bis 400 g, vorzugsweise zwischen 50 und 300 g; und
(e) 10 bis 30 % der Gewichtsmenge von Komponente (a) (als 25%ige, wäßrige Lösung).

6. Wäßrige Druckfarben für den Einsatz im Tiefdruck auf Papierdruckmaschinen oder im Gravurdruck auf Textildruckmaschinen, die neben den heiß sulimierbaren Dispersionsfarbstoffen eine Verdickerpräparation nach einem oder mehreren der Ansprüche 1 bis 5 aufweisen.

7. Verfahren zur Herstellung von Thermotransferdruckpapieren durch Bedrucken von Papierbahnen mit wäßrigen, heiß sublimierbare Dispersionsfarbstoffe enthaltenden Druckfarben im Tiefdruck auf Papierdruckmaschinen oder im Gravurdruck auf Textildruckmaschinen, dadurch gekennzeichnet, daß die Druckfarben eine Verdickerpräparation

nach einem oder mehreren der Ansprüche 1 bis 5 enthalten und nach dem Druck jeder Farbe eine Zwischentrocknung erfolgt.

8. Thermotransferdruckpapier, das im Tiefdruck auf Papierdruckmaschinen oder im Gravurdruck auf Textildruckmaschinen mit einer Druckfarbe bedruckt wurde, die neben den heiß sublimierbaren Dispersionsfarbstoffen eine Verdickerpräparation nach einem oder mehreren der Ansprüche 1 bis 5 enthielt.